# EUROPEAN PATENT APPLICATION

(11) **EP 3 547 015 A1**
(43) Date of publication of application: **02.10.2019**
(21) Application number: 16922378.1
(22) Date of filing: 28.12.2016
(51) Int. Cl.: G02F 1/1333, G02F 1/1362

(54) **MANUFACTURING METHOD FOR COA TYPE LIQUID CRYSTAL PANEL, AND COA TYPE LIQUID CRYSTAL PANEL**

(30) Priority: 22.11.2016 CN 201611046276
(71) Applicant: Shenzhen China Star Optoelectronics Technology Co., Ltd., Shenzhen City, Guangdong 518132 (CN)
(72) Inventor: DONG, Chengcai, Shenzhen Guangdong 518132 (CN)
(74) Representative: Petraz, Gilberto Luigi
(86) International application number: PCT/CN2016/112533
(87) International publication number: WO 2018/094805

(57) **Abstract**

A manufacturing method for a color filter on array (COA) type liquid crystal panel, and the COA type liquid crystal panel. Before a color resist layer (53) is provided on a second metal layer (56) by means of film-forming and patterning the color resist layer, a via hole (59) structure can be formed merely by means of digging a hole on a third insulating layer (57), such that there is no need to dig a hole on the color resist layer (53), simplifying the manufacturing process and improving the pixel aperture ratio.

## Description

### BACKGROUND OF THE INVENTION

### 1. Field of the Invention

The present disclosure relates to a field of display technology, and more specifically to a method for manufacturing a color-filter-on-array (COA) type liquid crystal panel, and a COA type liquid crystal panel that can improve a pixel aperture ratio.

### 2. Description of the Prior Art

A liquid crystal display (LCD) has the advantages of thinness, electricity saving, no radiation, and so on, and thereby has been widely used, for example, used in an LCD television, a mobile phone, a personal digital assistant (PDA), a digital camera, a computer screen, a laptop screen, or the like.

Generally, the LCD includes a case, a liquid crystal panel disposed in the case, and a backlight module disposed in the case. The structure of liquid crystal panel mainly includes a thin film transistor (TFT) array substrate, a color filter (CF) substrate, and a liquid crystal layer between the TFT array substrate and the CF substrate. The working principle of the liquid crystal panel is that the rotation of liquid crystal molecules in the liquid crystal layer is controlled by applying a driving voltage to two glass substrates so that light produced by the backlight module can be refracted to generate an image.

A COA technology is that a color resist layer on a CF substrate is disposed on an array substrate. The delay of the signals of metal traces is improved since there is a reduction of couplings between pixel electrodes and the metal traces in a COA structure. The COA structure can obviously reduce stray capacitances, and can improve the aperture ratio and display quality of a panel.

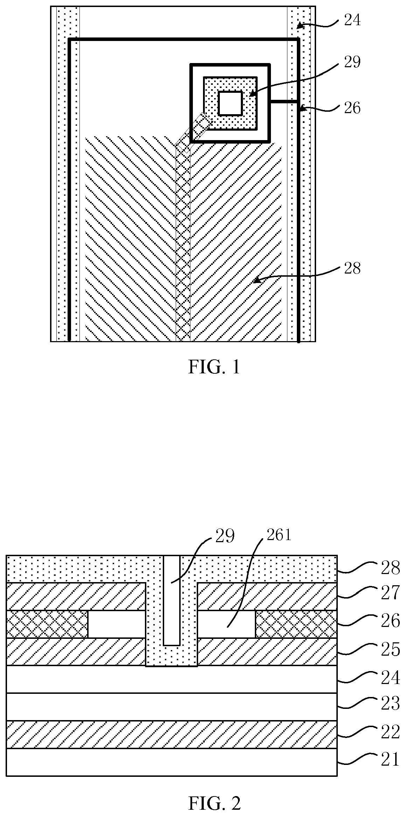

Please refer to FIGS. 1-2. FIG. 1 is a schematic view of the pixel design of an existing COA type liquid crystal panel. FIG. 2 is a profile view of a via hole and the periphery thereof in FIG. 1. Each of sub-pixel areas on the array substrate of the existing COA type liquid crystal panel includes a first metal layer 21, a first insulative layer 22 disposed on the first metal layer 21, a semiconductor layer 23 disposed on the first insulative layer 22, a second metal layer 24 disposed on the semiconductor layer 23, a second insulative layer 25 disposed on the second metal layer 24, a color resist layer 26 disposed on the second insulative layer 25, a third insulative layer 27 disposed on the color resist layer 26, and a pixel electrode layer 28 disposed on the third insulative layer 27. A via hole 29 is formed in the second insulative layer 25, the color resist layer 26, and the third insulative layer 27, and is positioned on the second metal layer 24. The pixel electrode layer 28 connects to the second metal layer 24 via the via hole 29.

However, in an existing film formation order, a via hole structure is formed by boring a hole on an insulative layer and a color resist layer, and the diameter of the hole 261 of the color resist layer is greater than the diameter of the hole of the insulative layer. The via hole structure can lose a large part of a pixel aperture ratio.

Therefore, the pixel design of the existing COA type liquid crystal panel needs to be improved to simplify the manufacturing process thereof and improve the pixel aperture ratio.

### SUMMARY OF THE INVENTION

### TECHNOLOGY PROBLEM

An object of the present disclosure is to provide a method for manufacturing a COA type liquid crystal panel, and a COA type liquid crystal panel that can simplify the manufacturing process thereof and improve a pixel aperture ratio.

### TECHNOLOGY SOLUTIONS

To achieve the above object, the present disclosure provides a method for manufacturing a COA type liquid crystal panel. The method includes the following steps of: providing a first substrate, and forming sequentially a first metal layer and a first insulative layer onto the first substrate; forming sequentially a color resist layer and a second insulative layer onto the first insulative layer, where the color resist layer is formed by processes such as coating, exposing, and developing, and the color resist layer is a single color resist layer, a double color resist layer, or a triple color resist layer; forming sequentially a semiconductor layer and a second metal layer onto the second insulative layer, and forming a third insulative layer covering the second insulative layer onto the second metal layer; and forming a via hole in the third insulative layer, and forming a pixel electrode layer onto the third insulative layer, where the pixel electrode layer connects to the second metal layer via the via hole.

To achieve the above object, the present disclosure provides a method for manufacturing a COA type liquid crystal panel. The method includes the following steps of: providing a first substrate, and forming sequentially a first metal layer and a first insulative layer onto the first substrate; forming sequentially a color resist layer and a second insulative layer onto the first insulative layer; forming sequentially a semiconductor layer and a second metal layer onto the second insulative layer, and forming a third insulative layer covering the second insulative layer onto the second metal layer; and forming a via hole in the third insulative layer, and forming a pixel electrode layer onto the third insulative layer, where the pixel electrode layer connects to the second metal layer via the via hole.

To achieve the above object, the present disclosure further provides a COA type liquid crystal panel including an array substrate. The array substrate includes a plurality of pixel areas, each of the pixel areas includes a first metal layer, a first insulative layer, a color resist layer, a second insulative layer, a semiconductor layer and a second metal layer which are sequentially formed on the second insulative layer, a third insulative layer which is disposed on the second metal layer and is coated on the second insulative layer, and a pixel electrode layer disposed on the third insulative layer in sequence; a via hole is provided on the third insulative layer, and the pixel electrode layer connects to the second metal layer via the via hole.

### BENEFICIAL EFFECT

The present disclosure has the following advantages. By arranging the film formation and patterning of the color resist layer before the second metal layer, a hole is bored in the third insulative layer so as to form a via hole structure. Therefore, boring on the color resist layer is avoided, the manufacturing process thereof is simplified, and the pixel aperture ratio is improved.

### BRIEF DESCRIPTION OF THE DRAWINGS

FIG. 1 is a schematic view of the pixel design of an existing COA type liquid crystal panel;
FIG. 2 is a profile view of a via hole and the periphery thereof in FIG. 1;
FIG. 3 is a flow chart of a method according to an embodiment of the present disclosure for manufacturing a COA type liquid crystal panel;
FIGS. 4A-4C are schematic views of structures of the color resist layers of COA type liquid crystal panels according to the embodiments of the present disclosure; and
FIG. 5 is a profile view of the via hole and periphery thereof of the COA type liquid crystal panel of the present disclosure.

### DETAILED DESCRIPTION OF THE PREFERRED EMBODIMENTS

A method for manufacturing a COA type liquid crystal panel and a COA type liquid crystal panel provided by the present disclosure will now be described with reference to annexed drawings and embodiments. The embodiments in the following description are merely a part rather than all of the embodiments of the present disclosure. All other embodiments obtained by persons of ordinary skill in the art based on the embodiments of the present disclosure without creative efforts shall fall within the protection scope of the present disclosure.

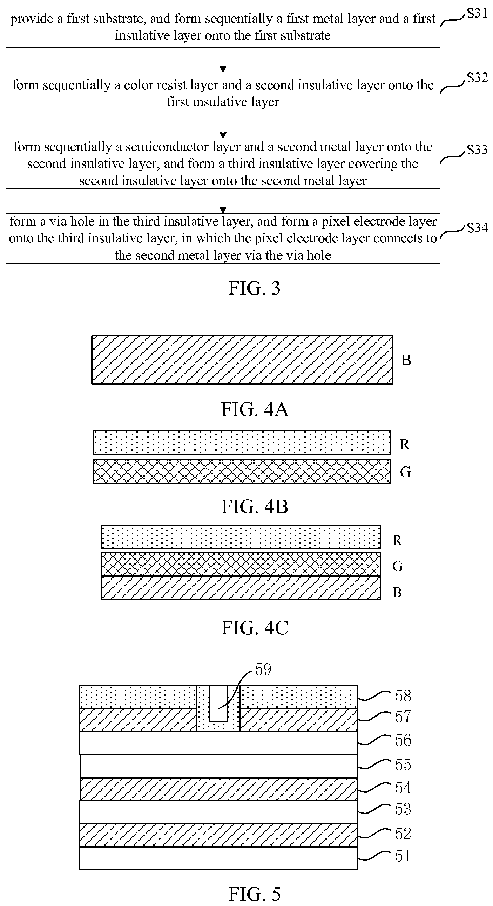

Please refer to FIG. 3, which is a flow chart of a method according to an embodiment of the present disclosure for manufacturing a COA type liquid crystal panel. The method includes the following steps of: S31: providing a first substrate, and forming sequentially a first metal layer and a first insulative layer onto the first substrate; S32: forming sequentially a color resist layer and a second insulative layer onto the first insulative layer; S33: forming sequentially a semiconductor layer and a second metal layer onto the second insulative layer, and forming a third insulative layer covering the second insulative layer onto the second metal layer; and S34: forming a via hole in the third insulative layer, and forming a pixel electrode layer onto the third insulative layer, where the pixel electrode layer connects to the second metal layer via the via hole. Detailed explanations are as follows.

In step S31, the first substrate is provided, and the first metal layer and the first insulative layer are sequentially formed on the first substrate.

Specifically, the first metal layer is formed on the first substrate by processes such as depositing and patterning, and then the first insulative layer is deposited on the first metal layer. The first insulative layer can be a SiNx layer.

Specifically, the first substrate can be the array substrate of the COA type liquid crystal panel. The first metal layer includes a gate electrode. The first insulative layer is a gate electrode insulating layer disposed on the gate electrode. The array substrate further has a scanning line connecting the gate electrode thereon.

In step S32, the color resist layer and the second insulative layer are sequentially formed on the first insulative layer.

Specifically, the color resist layer is formed on the first insulative layer by processes such as coating, exposing, and developing, and then the second insulative layer is deposited on the color resist layer. The second insulative layer can be a SiNx layer.

Optionally, the color resist layer is a single color resist layer, a double color resist layer, or a triple color resist layer. Please refer to FIGS. 4A-4C, which are schematic views of structures of the color resist layers of COA type liquid crystal panels according to the embodiments of the present disclosure. FIG. 4A shows the single color resist layer. The single color resist layer can be red, green, or blue, and FIG. 4A is blue (B). FIG. 4B shows the double color resist layer. The double color resist layer can be any two of red, green, and blue (no particular order), and FIG. 4B includes green (G) and red (R) in sequence. FIG. 4C shows the triple color resist layer. The triple color resist layer is a combination of red, green, or blue (no particular order), and FIG. 4C includes blue (B), green (G), and red (R) in sequence. In a COA process, processes such as coating, exposing, and developing are executed with three replications when the triple color resist layer is employed, thereby forming the triple color resist layer having red, green, and blue.

In step S33, the semiconductor layer and the second metal layer are sequentially formed on the second insulative layer, and the third insulative layer covering the second insulative layer is formed on the second metal layer.

Specifically, a semiconductor film is deposited on the second insulative layer. The semiconductor film is etched to form the semiconductor layer. The second metal layer is formed on the second insulative layer by processes such as depositing and patterning. The third insulative layer is deposited on the second metal layer. The second metal layer connects to the semiconductor layer. The third insulative layer is covered on the second insulative layer. The second insulative layer and the third insulative layer are a SiNx layer. The material of the semiconductor layer can be amorphous silicon (a-Si).

Specifically, the first substrate can be the array substrate of the COA type liquid crystal panel. The second metal layer includes a source / drain electrode. The third insulative layer is a passivation layer which is disposed on the source / drain electrode and is coated on the second insulative layer. The source / drain electrode connects to the semiconductor layer. The array substrate further has a data line connecting the source / drain electrode thereon. The data line is disposed on the second insulative layer, and the data line and the scanning line are vertically crossed each other in a horizontal direction.

The step S33 specifically includes the following steps of: depositing sequentially an i-a-Si layer and an n-a-Si layer onto the gate electrode insulating layer corresponding the position of the gate electrode, and patterning the i-a-Si layer; forming the source / drain electrode and the data line onto the second insulative layer by processes such as depositing and patterning, where the source / drain electrode connects to the semiconductor layer, and the data line connects to the source / drain electrode; etching the n-a-Si; and depositing the SiNx layer.

In step S34, the via hole is formed on the third insulative layer, and the pixel electrode layer is formed on the third insulative layer. The pixel electrode layer connects to the second metal layer via the via hole.

Specifically, the via hole is formed in the third insulative layer and on the second metal layer by a patterning process. The pixel electrode layer is formed on the third insulative layer by processes such as depositing and patterning. The pixel electrode layer connects to the second metal layer via the via hole. Specifically, the pixel electrode layer connects to the source / drain electrode via the via hole. The material of the pixel electrode layer can be indium tin oxide (ITO).

At this point, the first substrate as the array substrate is completed. Then, the first substrate and the second substrate are combined with each other, and a liquid crystal layer is provided therebetween to achieve the manufacture of the COA type liquid crystal panel. The second substrate has a black matrix layer thereon. The black matrix layer has a common electrode layer thereon. The material of the common electrode layer can be indium tin oxide.

In the method for manufacturing the COA type liquid crystal panel of the disclosure, by arranging the film formation and patterning of the color resist layer before the second metal layer, boring on the color resist layer is avoided, and a via hole structure can be formed. Therefore, the manufacturing process thereof is simplified, and the pixel aperture ratio is improved.

Please refer to FIG. 5, which is a profile view of the via hole and periphery thereof of the COA type liquid crystal panel of the present disclosure. The COA type liquid crystal panel includes an array substrate. The array substrate includes a plurality of pixel areas. Each of the pixel areas includes a first metal layer 51, a first insulative layer 52, a color resist layer 53, a second insulative layer 54, a semiconductor layer 55 and a second metal layer 56 which are sequentially formed on the second insulative layer 54, a third insulative layer 57 which is disposed on the second metal layer 56 and is coated on the second insulative layer 54, and a pixel electrode layer 58 disposed on the third insulative layer 57 in sequence. A via hole 59 is provided on the third insulative layer 57. The pixel electrode layer 58 connects to the second metal layer 56 via the via hole 59.

Specifically, the first insulative layer 52, the second insulative layer 54, and the third insulative layer 57 can be a SiNx layer. The material of the pixel electrode layer can be indium tin oxide (ITO). The material of the semiconductor layer can be amorphous silicon (a-Si).

Specifically, the first metal layer 51 includes a gate electrode. The first insulative layer 52 is a gate electrode insulating layer disposed on the gate electrode. The array substrate further has a scanning line connecting the gate electrode thereon. The second metal layer 56 includes a source / drain electrode. The third insulative layer 57 is a passivation layer which is disposed on the source / drain electrode and is coated on the second insulative layer 54. The source / drain electrode connects to the semiconductor layer 55 (FIG. 5 shows the second metal layer 56 disposed on the semiconductor layer 55; in terms of parts other than the via hole 59 on the array substrate, the second metal layer 56 including the source / drain electrode can be formed on the second insulative layer 54 by depositing and patterning). The pixel electrode layer 58 connects to the source / drain electrode via the via hole 59. The array substrate further has a data line connecting the source / drain electrode thereon. The data line is disposed on the second insulative layer 54, and the data line and the scanning line vertically cross each other in a horizontal direction.

Optionally, the color resist layer is a single color resist layer, a double color resist layer, or a triple color resist layer. The structure of the color resist layer can refer to FIGS. 4A-4C and the description thereof, and it will not be redundantly stated herein.

The COA type liquid crystal panel further includes a glass substrate which are opposite the array substrate and a liquid crystal layer between the array substrate and glass substrate. The glass substrate has a black matrix layer thereon. The black matrix layer has a common electrode layer thereon. The material of the common electrode layer can be indium tin oxide.

In the COA type liquid crystal panel of the disclosure, by arranging the film formation and patterning of the color resist layer before the second metal layer, a hole is bored in the third insulative layer so as to form a via hole structure. Therefore, the manufacturing process thereof is simplified, and the pixel aperture ratio is improved.

The above are exemplary embodiments of the present disclosure. It should be noted that a number of improvements and modifications may be made by those of ordinary skill in the art without departing from the principles of the present disclosure, and should be considered as falling within the scope of the disclosure.

## Claims

1. A method for manufacturing a color-filter-on-array (COA) type liquid crystal panel, comprising the following steps of:
providing a first substrate, and forming sequentially a first metal layer and a first insulative layer onto the first substrate;
forming sequentially a color resist layer and a second insulative layer onto the first insulative layer, wherein the color resist layer is formed by processes such as coating, exposing, and developing, and the color resist layer is a single color resist layer, a double color resist layer, or a triple color resist layer;
forming sequentially a semiconductor layer and a second metal layer onto the second insulative layer, and forming a third insulative layer covering the second insulative layer onto the second metal layer; and
forming a via hole in the third insulative layer, and forming a pixel electrode layer onto the third insulative layer, wherein the pixel electrode layer connects to the second metal layer via the via hole.

2. The method of claim 1, wherein the first metal layer, the second metal layer, and the pixel electrode layer are formed by processes such as depositing and patterning.

3. The method of claim 1, wherein the via hole is formed by a patterning process.

4. The method of claim 1, wherein the first metal layer comprises a gate electrode, the first insulative layer is a gate electrode insulating layer disposed on the gate electrode; the second metal layer comprises a source / drain electrode, the third insulative layer is a passivation layer which is disposed on the source / drain electrode and is coated on the second insulative layer, the source / drain electrode connects to the semiconductor layer, and the pixel electrode layer connects to the source / drain electrode via the via hole.

5. The method of claim 1, wherein the material of the pixel electrode layer is indium tin oxide.

6. A method for manufacturing a color-filter-on-array (COA) type liquid crystal panel, comprising the following steps of:
providing a first substrate, and forming sequentially a first metal layer and a first insulative layer onto the first substrate;
forming sequentially a color resist layer and a second insulative layer onto the first insulative layer;
forming sequentially a semiconductor layer and a second metal layer onto the second insulative layer, and forming a third insulative layer covering the second insulative layer onto the second metal layer; and
forming a via hole in the third insulative layer, and forming a pixel electrode layer onto the third insulative layer, wherein the pixel electrode layer connects to the second metal layer via the via hole.

7. The method of claim 6, wherein the first metal layer, the second metal layer, and the pixel electrode layer are formed by processes such as depositing and patterning.

8. The method of claim 6, wherein the color resist layer is formed by processes such as coating, exposing, and developing.

9. The method of claim 6, wherein the via hole is formed by a patterning process.

10. The method of claim 6, wherein the first metal layer comprises a gate electrode, the first insulative layer is a gate electrode insulating layer disposed on the gate electrode; the second metal layer comprises a source / drain electrode, the third insulative layer is a passivation layer which is disposed on the source / drain electrode and is coated on the second insulative layer, the source / drain electrode connects to the semiconductor layer, and the pixel electrode layer connects to the source / drain electrode via the via hole.

11. The method of claim 6, wherein the material of the pixel electrode layer is indium tin oxide.

12. The method of claim 6, wherein the color resist layer is a single color resist layer, a double color resist layer, or a triple color resist layer.

13. A color-filter-on-array (COA) type liquid crystal panel, comprising an array substrate, wherein
the array substrate comprises a plurality of pixel areas, each of the pixel areas comprises a first metal layer, a first insulative layer, a color resist layer, a second insulative layer, a semiconductor layer and a second metal layer which are sequentially formed on the second insulative layer, a third insulative layer which is disposed on the second metal layer and is coated on the second insulative layer, and a pixel electrode layer disposed on the third insulative layer in sequence; a via hole is provided on the third insulative layer, and the pixel electrode layer connects to the second metal layer via the via hole.

14. The COA type liquid crystal panel of claim 13, wherein the first metal layer comprises a gate electrode, the first insulative layer is a gate electrode insulating layer disposed on the gate electrode; the second metal layer comprises a source / drain electrode, the third insulative layer is a passivation layer which is disposed on the source / drain electrode and is coated on the second insulative layer, the source / drain electrode connects to the semiconductor layer, and the pixel electrode layer connects to the source / drain electrode via the via hole.

15. The COA type liquid crystal panel of claim 13, wherein the material of the pixel electrode layer is indium tin oxide.

16. The COA type liquid crystal panel of claim 13, wherein the color resist layer is a single color resist layer, a double color resist layer, or a triple color resist layer.
